# EUROPÄISCHE PATENTSCHRIFT

(11) **EP 0 972 688 B1**
(45) Veröffentlichungstag und Bekanntmachung des Hinweises auf die Patenterteilung: **14.06.2006**
(21) Anmeldenummer: 99113924.7
(22) Anmeldetag: 16.07.1999
(51) Int. Cl.: B60S 9/08, B60S 9/22

(54) **Hubeinrichtung mit Schaftrohr und Stützrohr**
Lifting device with a tube shaft and a supporting tube
Dispositif de levage avec fût de conduit et tube support

(30) Priorität: 17.07.1998 DE 19832260
(43) Veröffentlichungstag der Anmeldung: 19.01.2000
(73) Patentinhaber: haacon hebetechnik gmbh, D-97896 Freudenberg (DE)
(72) Erfinder: Geis, Hermann, 63927 Bürgstadt (DE); Grän, Michael, 97896 Freudenberg (DE); Hartmann, Fred, 97896 Freudenberg (DE); Lazarus, Konrad, 97896 Freudenberg (DE)
(74) Vertreter: Böck, Bernhard

(56) Entgegenhaltungen:
- EP-A- 0 380 941
- FR-A- 2 635 740

## Beschreibung

Die vorliegende Erfindung betrifft eine Hubeinrichtung, insbesondere eine Sattelstütze oder dergleichen, mit einem Stützrohr und einem gegenüber dem Stützrohr mittels eines Hubgetriebes verfahrbaren und das Stützrohr zumindest teilweise aufnehmenden Schaftrohr, wobei das Schaftrohr mit einer Montageeinrichtung zur mittelbaren oder unmittelbaren Befestigung an einem anzuhebenden Gegenstand, insbesondere ein Fahrzeugchassis, versehen ist, und die Montageeinrichtung als integraler Bestandteil des Schaftrohrs eine Seitenrwand des chaftrohrs bildet. Eine derartige Hubeinrichtung ist z.B. aus des EP-A-0 380 941 bekannt.

Hubeinrichtungen, insbesondere Sattelstützen, der eingangs genannten Art, die beispielsweise zur Abstützung eines von einer Zugmaschine abgekoppelten Sattelaufliegers verwendet werden, müssen in der Regel trotz ihres hohen Eigengewichts von der Bedienungsperson manuell gehandhabt werden, um in der dafür bestimmten Position mittels der am Schaftrohr vorgesehenen Montageeinrichtung mit dem Fahrzeugchassis verbunden zu werden.

Bei den bekannten Hubeinrichtungen ist die Montageeinrichtung, die beispielsweise als eine Montageplatte ausgeführt ist, derart mit einer Seitenwand des Schaftrohrs verbunden, daß die Montageplatte parallel zur Seitenwand angeordnet ist. Die Montageplatte erfüllt bei einer derartigen Konstruktion lediglich die Funktion eines mechanischen Anschlußelements zum Anschluß des Schaftrohrs an das Fahrzeugchassis und bildet neben dem aufgrund der benötigten Festigkeit in der Ausführung schweren Schaftrohr eine zusätzliche Masse, die das Eigengewicht der Hubeinrichtung erhöht.

Aus der EP-A-0 380 941 geht eine Hubeinrichtung hervor, bei der ein Teil der Wand des Schaftrohres als Montageplatte ausgeführt ist. Die Hubeinrichtung wird durch eine einteilige Ausbildung der Montageplatte und des Schaftrohrs gebildet, so dass Schaftrohr und Montageplatte in einem Strang- oder Spritzgussverfahren hergestellt werden können.

Der vorliegenden Erfindung liegt daher die Aufgabe zugrunde, eine Hubeinrichtung vorzuschlagen, die sich durch ein möglichst geringes Eigengewicht auszeichnet.

Diese Aufgabe wird durch eine Hubeinrichtung mit den Merkmalen des Anspruchs 1 gelöst.

Bei der erfindungsgemäßen Hubeinrichtung ist die Montageeinrichtung als integraler Bestandteil des Schaftrohrs ausgebildet, so daß die Montageeinrichtung kein zusätzliches Bauteil zum Schaftrohr darstellt, sondern vielmehr als Teil des Schaftrohrs an der Schaftrohr-Funktion beteiligt ist und somit in seiner Funktion nicht auf die Ausbildung einer Anschlußmöglichkeit zum Anschluß an den anzuhebenden Gegenstand beschränkt ist.

Aufgrund dieser Funktionsintegration ist es möglich, insgesamt die Masse und damit das Gewicht der Hubeinrichtung zu reduzieren.

Bei der erfindungsgemäßen Ausführungsform der Erfindung bildet die Montageeinrichtung eine Seitenwand des Schaftrohrs, so daß ein erheblicher Teil des Schaftrohrs durch die Montageeinrichtung gebildet wird

Erfindungsgemäß, wenn die Montageeinrichtung darüber hinaus als Montageplatte ausgebildet ist und ergänzt durch ein offenes Profilelement das Schaftrohr bildet, ist gleichzeitig mit der erzielten Funktionsintegration ein besonders einfacher Aufbau des Schaftrohrs mit den sich daraus für die Fertigung ergebenden Vorteilen möglich.

Eine besonders einfache Fertigung wird möglich, wenn das Profilelement aus einem Ü-Profil gebildet ist, so daß auch standardmäßig als Massenteil gefertigte Stahlprofile zur Herstellung des Schaftrohrs verwendet werden können, was letztendlich eine besonders kostengünstige Fertigung ermöglicht.

Zur Erzielung einer hinsichtlich der Fertigung optimierten Gestaltung erweist es sich als vorteilhaft, wenn die Montageplatte an einem Endbereich eine Biegelasche mit einer Fensteröffnung aufweist, derart, daß die aus der Plattenebene der Montageplatte herausgebogene Biegelasche eine positionierende Einstecköffnung für einen Endbereich des Profilelements bildet.

Als weitere Positionierungshilfe für einen zur Herstellung des Schaftrohrs aus der Montageplatte und dem Profilelement notwendigen Verbindungsvorgang kann vorgesehen werden, daß die Montageplatte in einem Kontaktbereich mit dem Profilelement mit Abstand zur Biegelasche mit einem Positionsanschlag zum Anschlag gegen einen Profilschenkel des Profilelements versehen ist. Zusammen mit der positionierenden Einstecköffnung, die mit einem Endbereich des Profilelements zusammenwirkt, ermöglicht der Positionsanschlag eine exakte Ausrichtung des Profilelements auf der Montageplatte bzw. in der Plattenebene, so daß zeitaufwendige Positionierungsmaßnahmen zur Vorbereitung des Verbindungsvorgangs entfallen können.

Eine besonders einfache Möglichkeit zur Realisierung des Positionsanschlags besteht darin, in der Montageplatte an der hierfür vorgesehenen Stelle einen aus der Plattenebene herausragenden Noppen vorzusehen, der beispielsweise durch einen Prägevorgang herstellbar ist.

Weiterhin erweist es sich sowohl als eine Maßnahme zur Reduzierung der Masse der Montageplatte als auch zur Erhöhung der Flexibilität betreffend die Positionsierungsmöglichkeiten der Montageplatte als vorteilhaft, die Montageplatte mit beidseitig parallel zu Längsrändern der Montageplatte verlaufenden Lochreihen mit Befestigungslöchern zur Befestigung der Montageplatte am anzuhebenden Gegenstand zu versehen.

Insbesondere zum Anbau kleinerer Anbau- oder Zubehörteile erweist es sich als vorteilhaft, zusätzlich zu den vorgenannten Lochreihen zumindest eine weitere längs einer Lochreihe verlaufend angeordnete weitere Lochreihe vorzusehen, die einen vergleichsweise kleineren Lochabstand und/oder kleinere Befestigungslöcher aufweist.

Nachfolgend wird eine bevorzugte Ausführungsform der Hubeinrichtung anhand der Zeichnungen näher erläutert. Es zeigen:
- **Fig. 1**: eine Hubeinrichtung mit einem gegenüber einem Stützrohr verfahrbaren Schaftrohr;
- **Fig. 2**: das Schaftrohr in einer Schnittdarstellung gemäß Schnittlinienverlauf II - II in **Fig. 1**;
- **Fig. 3**: das Schaftrohr in einer Frontansicht;
- **Fig. 4**: das in **Fig. 3** dargestellte Schaftrohr in einer Schnittdarstellung gemäß Schnittlinienverlauf IV - IV ;
- **Fig. 5**: einen Blechzuschnitt zur Herstellung des Schaftrohrs.

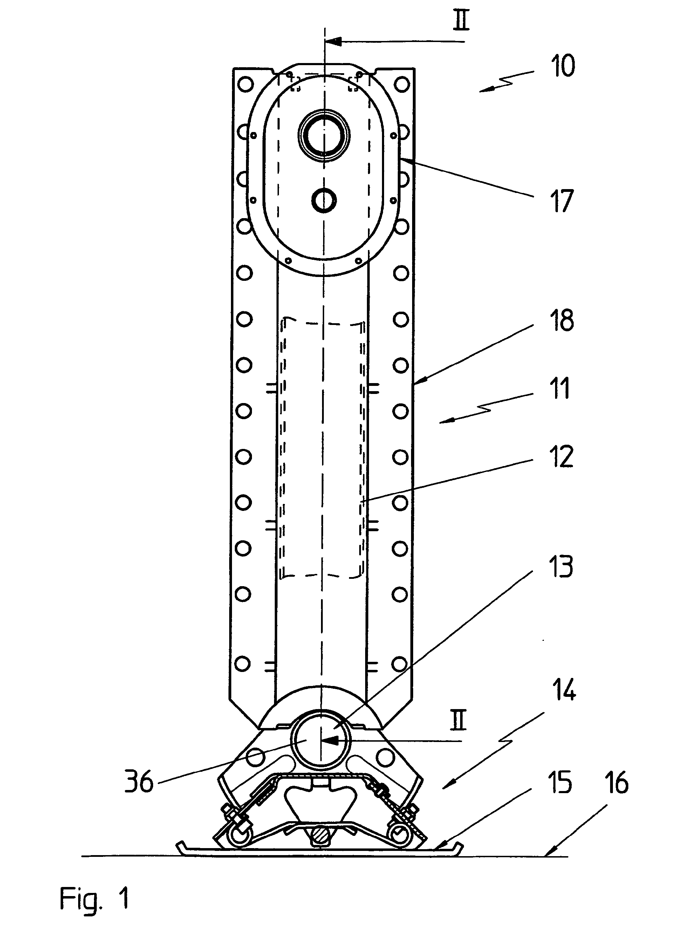

**Fig. 1** zeigt eine Hubstütze 10 mit einem Schaftrohr 11, das gegenüber einem im Innern des Schaftrohrs 11 aufgenommenen Stützrohr 12 verfahrbar ist. Das Stützrohr 12 stützt sich an seinem unteren Ende auf einem Schwenklager 13 eines Schwenkfußes 14 ab, der mit einer Fußplatte 15 auf einem Untergrund 16 steht.

Am Schaftrohr 11 ist ein Hubgetriebe 17 angeordnet, das mit einer hier nicht näher dargestellten und im Innern des Stützrohrs 12 angeordnete Hubspindel zusammenwirkt, die ein Verfahren des Schaftrohrs 11 gegenüber dem Stützrohr 12 ermöglicht. Das Schaftrohr 11 weist rückwärtig eine Montageplatte 18 auf, die zum mechanischen Anschluß des Schaftrohrs 11 an einem mittels der Hubstütze 10 anzuhebenden Gegenstand, also beispielsweise einem Fahrzeugchassis eines Sattelaufliegers, dient, um die vom Schaftrohr 11 gegenüber dem Stützrohr 12 ausgeführte Hubbewegung auf das Fahrzeugchassis zu übertragen.

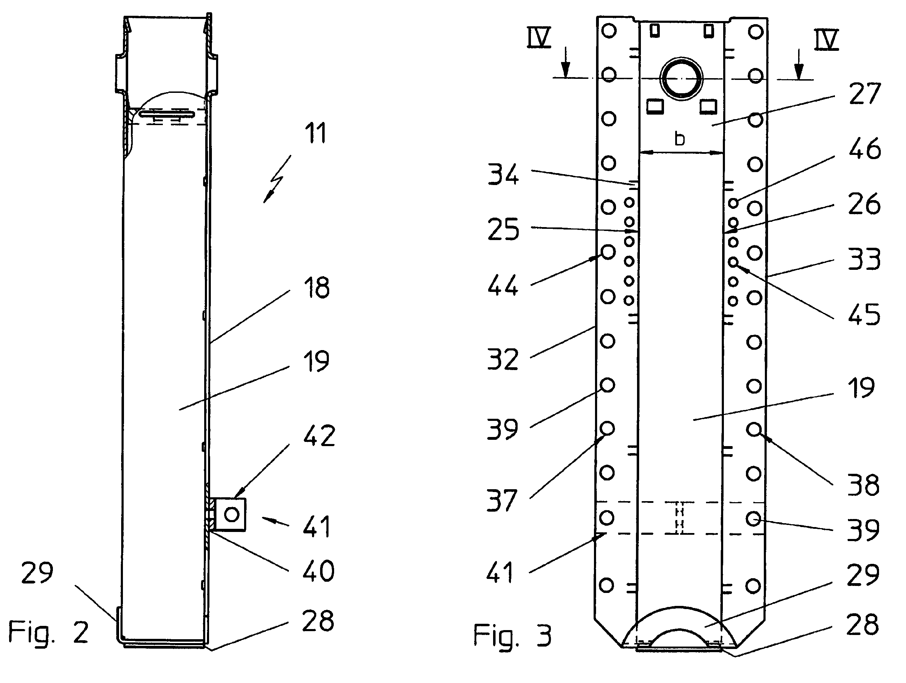

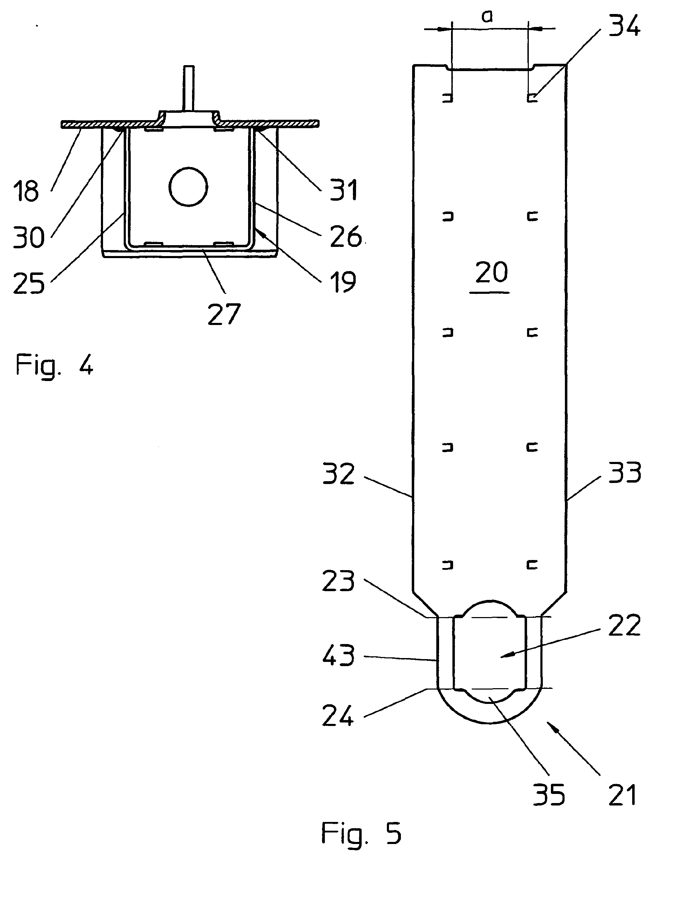

Wie insbesondere aus den **Fig. 2** bis **5** deutlich wird, zeichnet sich das dargestellte Schaftrohr 11 durch einen besonders einfachen, hier lediglich aus zwei Teilen, nämlich aus der Montageplatte 18 und einem U-Profil 19, zusammengesetzen Aufbau aus. Die Montageplatte 18 ist aus einem in **Fig. 5** dargestellten Blechzuschnitt 20 gefertigt, der im wesentlichen langgestreckt und rechteckförmig an seinem in **Fig. 5** unteren Endbereich 21 eine Biegelasche 43 mit einem im wesentlichen rechteckförmigen Auge 22 aufweist.

Zur Herstellung des Schaftrohres 11 wird zunächst, wie aus einer Zusammenschau der **Fig. 2** und **5** ersichtlich ist, die Biegelasche 43 des Blechzuschnitts 20 längs der in **Fig. 5** mit gestricheltem Linienverlauf dargestellten Biegelinien 23 und 24 abgekantet, so daß die in **Fig. 2**, die die Montageplatte 18 in Seitenansicht zeigt, dargestellte Konfiguration der Montageplatte 18 erreicht wird. Anschließend wird, wie aus einer Zusammenschau der **Fig. 2** und **4** deutlich wird, das U-Profil 19 mit seinen Schenkeln 25, 26 so auf die Montageplatte 18 aufgelegt, daß das U-Profil 19 mit einer Profilbasis 27 beabstandet von der Montageplatte 18 angeordnet ist und durch die Schenkel 25, 26 sowie die Basis 27 des U-Profils 19 und die Montageplatte 18 ein allseitig umschlossener, im Querschnitt rechteckförmiger Kanal gebildet wird, der zur Aufnahme und Führung des Stützrohres 12 dient (**Fig. 1**).

Wie insbesondere **Fig. 2** zeigt, dient das im Blechzuschnitt 20 an der Montageplatte 18 ausgebildete Auge 22 dabei zur positionierenden Aufnahme eines Endes oder Endquerschnitts 28 des U-Profils 19. Eine zusätzlich positionierende Wirkung wird durch einen durch das zweimalige Abkanten des Blechzuschnitts 20 gebildeten, parallel zur Montageplatte 18 angeordneten Verstärkungskragen 29 erzielt. Das U-Profil ist daher, wie **Fig. 2** zeigt, mit seinem unteren Endquerschnitt 28 zum einen im Auge 22 positioniert und zum anderen zwischen dem Verstärkungskragen 29 und der Montageplatte 18 aufgenommen. In dieser Position kann das U-Profil 19 durch lediglich zwei Längsschweißnähte 30, 31, die hier beispielsweise als Kehlnaht ausgestaltet auf einfache Art und Weise und daher zeitsparend und kostengünstig ausgeführt werden können, fixiert werden.

Wie aus den Darstellungen gemäß den **Fig. 3** und **5** ersichtlich, ist die Montageplatte 18 bzw. der Blechzuschnitt 20, der zur Herstellung der Montageplatte 18 dient, mit sich parallel zu Längsrändern 32, 33 erstrekkend angeordneten Reihen von hier jeweils drei Prägenoppen 34 versehen, die quer zur Längsrichtung des Blechzuschnitts 20 bzw. der Montageplatte 18 einen lichten Abstand a voneinander aufweisen, der der Breite b der Profilbasis 27 des U-Profils 19 entspricht. Infolge einer Anordnung des U-Profils 19 auf der Montageplatte 18, derart, daß sich der untere Endquerschnitt 28 des U-Profils 19 eingeführt in das Auge 22 an der Montageplatte 18 und die Schenkel 25, 26 des U-Profils anliegend an den jeweils zugeordneten Prägenoppen 34 befinden, ergibt sich eine eindeutige Positionierung des U-Profils 19 gegenüber der Montageplatte 18 für einen nachfolgenden Schweißvorgang zur Herstellung der Längsschweißnähte 30 und 31. Je nach Art der Ausführung und Anzahl der Prägenoppen 34 ist es aufgrund der positionierenden und die Relativanordnung des U-Profils 19 gegenüber der Montageplatte 18 fixierenden Wirkung der Prägenoppen 34 auch möglich, die Ausführung der Längsschweißnähte 30, 31 auf lediglich kurze Schweißnahtlängen zu beschränken, die beispielsweise alternierend in den Zwischenräumen der Prägenoppen 34 vorgesehen werden können. Natürlich können anstatt der Prägenoppen 34 auch andere Positionierungs- bzw. Fixierungshilfen vorgesehen werden, wie beispielsweise auch aus der Ebene der Montageplatte 18 herausbiegbare Biegelaschen.

Für den Fall, daß das dargestellte Schaftrohr 11 zum Aufbau einer Hubstütze 10 verwendet wird, deren Stützrohr 12, wie in **Fig. 1** dargestellt, mit einem Schwenkfuß 14 versehen ist, kann der im Auge 22 aufgenommene untere Endquerschnitt 28, wie in **Fig. 5** durch den gestrichelten Linienverlauf dargestellt, mit einer konkaven Ausnehmung 35 versehen sein, die sowohl am unteren Ende des U-Profils 19 als auch im Verstärkungskragen 29 ausgeführt ist, so daß insgesamt ein benötigter Freiraum für eine Schwenkachse 36 des Schwenkauflagers 13 ausgebildet ist.

Bei dem in den **Fig. 1** bis **5** dargestellten Ausführungsbeispiel des Schaftrohres 11 ist die Montageplatte 18 über ihre gesamte, im wesentlichen mit dem U-Profil 19 übereinstimmende Länge mit Lochreihen 37 und 38 versehen. Aufgrund der Vielzahl von Befestigungslöchern 39 der Lochreihen 37, 38, die zur Befestigung des Schaftrohres 11 an dem mit der Hubstütze 10 anzuhebenden Gegenstand, also beispielsweise dem Chassis eines Sattelaufliegers, dienen, kann leicht eine jeweilige Anpassung der Befestigungshöhe des Schaftrohres 11 durchgeführt werden. Darüber hinaus dienen die Lochreihen 37 und 38, wie aus den **Fig. 2** bis **4** zu ersehen, gleichzeitig zur Befestigung einer, hier mit einer Anschraublasche 40 ausgebildeten Krafteinleitung 41, die ein quer zur Ebene der Montageplatte 18 angeordnetes Befestigungsauge 42 aufweist. Die Krafteinleitung 41 kann über ihre Anschraublasche 40 mit der Montageplatte 18 des Schaftrohres 11 verbunden werden, so daß zwischen dem Befestigungsauge 42 und einem weiteren Befestigungspunkt, der an dem mit der Hubstütze anzuhebenden Gegenstand, also beispielsweise dem Chassis eines Sattelaufliegers, angeordnet sein kann, eine hier nicht näher dargestellte Aussteifungseinrichtung, also beispielsweise einer Druckstange, montiert werden kann.

Das Befestigungsauge 42 kann, wie in den **Fig. 2** bis **4** dargestellt, als Bestandteil der Anschraublasche 40 ausgebildet sein und mit den Befestigungslöchern 39 der Lochreihen 37, 38 entsprechend der gewünschten Anbauhöhe verschraubt werden. Alternativ ist es auch möglich, die Lasche mit der Rückseite der Montageplatte 18 zu verschweißen.

Die Lochreihen 37, 38 in der Montageplatte 18 können auch zum Anbau von Halte- oder Aufnahmevorrichtungen für Fahrzeugzubehör, wie beispielsweise Unterlegkeile oder Feuerlöscher, verwendet werden.

Neben den Lochreihen 37, 38, die sich parallel und benachbart den Längsrändern 32, 33 der Montageplatte 18 erstrecken, können auch weitere Lochreihen 44, 45 vorgesehen werden, die benachbart den Schenkeln 25, 26 des U-Profils 19 angeordnet sind. Die Lochreihen 44, 45 weisen Befestigungslöcher 46 auf. Die Lochreihen 44, 45 weisen im Vergleich mit den Lochreihen 37, 38 einen verringerten Lochabstand auf und sind beispielsweise für den Anbau kleinerer Anbauteile verwendbar.

## Patentansprüche

1. Hubeinrichtung, insbesondere Sattelstütze (10) oder dergleichen, mit einem Stützrohr (12) und einem gegenüber dem Stützrohr (12) mittels eines Hubgetriebes (17) verfahrbaren und das Stützrohr (12) zumindest teilweise aufnehmenden Schaftrohr (11), wobei das Schaftrohr (11) mit einer Montageeinrichtung (18) zur mittelbaren oder unmittelbaren Befestigung an einem anzuhebenden Gegenstand, insbesondere einem Fahrzeugchassis, versehen ist, und die Montageeinrichtung (18) als integraler Bestandteil des Schaftrohrs (11) eine Seitenwand des Schaftrohrs bildet,
**dadurch gekennzeichnet,**
**dass** die Montageeinrichtung (18) als Montageplatte ausgebildet ist und ergänzt durch ein offenes Profilelement (19) das Schaftrohr (11) bildet.

2. Hubeinrichtung nach Anspruch 1,
**dadurch gekennzeichnet,**
**dass** das Profilelement (19) aus einem U-Profil gebildet ist.

3. Hubeinrichtung nach Anspruch 1 oder 2,
**dadurch gekennzeichnet,**
**dass** die Montageplatte (18) an einem Endbereich (21) eine Biegelasche (43) mit einer Fensteröffnung (22) aufweist, derart, dass die aus der Plattenebene der Montageplatte (18) herausgebogene Biegelasche (43) eine positionierende Einstecköffnung für einen Endbereich (28) des Profilelements (19) bildet.

4. Hubeinrichtung nach Anspruch 3,
**dadurch gekennzeichnet,**
**dass** die Montageplatte (18) in einem Kontaktbereich mit dem Profilelement (19) mit Abstand zur Biegelasche (43) mit einem Positionsanschlag (34) zum Anschlag gegen einen Profilschenkel (25, 26) des Profilelements (19) versehen ist.

5. Hubeinrichtung nach Anspruch 4,
**dadurch gekennzeichnet,**
**dass** der Positionsanschlag (34) als ein in der Montageplatte (18) ausgebildeter Prägenoppen ausgeführt ist.

6. Hubeinrichtung nach einem der vorangehenden Ansprüche,
**dadurch gekennzeichnet,**
**dass** die Montageplatte (18) mit beidseitig parallel zu Längsrändern (32, 33) der Montageplatte (18) verlaufenden Lochreihen (37, 38) mit Befestigungslöchern (39) zur Befestigung der Montageplatte (18) am anzuhebenden Gegenstand versehen ist.

7. Hubeinrichtung nach Anspruch 6,
**dadurch gekennzeichnet,**
**dass** die Montageplatte (18) mit mindestens einer zusätzlichen, längs einer Lochreihe (37, 38) verlaufend angeordneten Lochreihe (44, 45) versehen ist, die einen relativ zu einer Lochreihe (37, 38) verringerten Lochabstand und/oder kleinere Befestigungslöcher (46) aufweist.

## Claims

1. Lifting device, in particular trailer support (10) or the like, with a supporting tube (12) and a shaft tube (11) which may be moved relative to the supporting tube (12) by means of a lifting gear (17) and at least partially receives the supporting tube (12), the shaft tube (11) being provided with a mounting device (18) for indirectly or directly fastening to an object to be lifted, in particular a vehicle chassis, and the mounting device (18) as an integral component of the shaft tube (11) forming a side wall of the shaft tube,
**characterised in that**
the mounting device (18) is configured as a mounting plate and, supplemented by an open profile element (19), forms the shaft tube (11).

2. Lifting device according to claim 1,
**characterised in that**
the profile element (19) is formed from a U-section.

3. Lifting device according to claim 1 or 2,
**characterised in that**
the mounting plate (18) comprises a bending tab (43) with an aperture (22) at an end region (21), such that the bending tab (43) bent away from the plane of the mounting plate (18) forms a positionable insertion opening for an end region (28) of the profile element (19).

4. Lifting device according to claim 3,
**characterised in that**
the mounting plate (18), in a contact region with the profile element (19) at a distance from the bending tab (43), is provided with a position stop (34) for abutment against a profile leg (25, 26) of the profile element (19).

5. Lifting device according to claim 4,
**characterised in that**
the position stop (34) is designed as an embossed protrusion configured in the mounting plate (18).

6. Lifting device according to any one of the preceding claims,
**characterised in that**
the mounting plate (18) is provided with rows of holes (37, 38) extending on both sides parallel to the longitudinal edges (32, 33) of the mounting plate (18) with fastening holes (39) for fastening the mounting plate (18) to the object to be lifted.

7. Lifting device according to claim 6,
**characterised in that**
the mounting plate (18) is provided with at least one additional row of holes (44, 45) arranged extending along a row of holes (37, 38) and which have reduced hole spacing and/or smaller fastening holes (46) relative to a row of holes (37, 38).

## Revendications

1. Dispositif de levage, en particulier support de sellette (10) ou similaire, comprenant un tube de support (12) et un fût (11) déplaçable par rapport au tube de support (12) au moyen d'un mécanisme de levage (17) et entourant au moins partiellement le tube de support (12), le fût (11) étant muni d'un dispositif de montage (18) pour la fixation indirecte ou directe à un objet à lever, en particulier un châssis de véhicule, et le dispositif de montage (18) en tant que partie intégrante du fût (11) formant une paroi latérale du fût,
**caractérisé en ce que**
le dispositif de montage (18) présente la forme d'une plaque de montage et forme le fût (11) conjointement avec un élément profilé ouvert (19).

2. Dispositif de levage selon la revendication 1,
**caractérisé en ce que**
l'élément profilé (19) est un profilé en forme de U.

3. Dispositif de levage selon la revendication 1 ou 2,
**caractérisé en ce qu'**
au niveau d'une zone terminale (21) la plaque de montage (18) présente une languette pliée (43) avec une fenêtre (22) de sorte que la languette pliée (43) pliée hors du plan de plaque de la plaque de montage (18) forme une ouverture d'insertion pour positionner une zone terminale (28) de l'élément profilé (19).

4. Dispositif de levage selon la revendication 3,
**caractérisé en ce que**
dans une zone de contact avec l'élément profilé (19) la plaque de montage (18) est munie d'une butée de position (34) disposée à distance de la languette pliée (43) pour buter contre une branche profilée (25, 26) de l'élément profilé (19).

5. Dispositif de levage selon la revendication 4,
**caractérisé en ce que**
la butée de position (34) est réalisée sous la forme d'un tenon estampé formé dans la plaque de montage (18).

6. Dispositif de levage selon l'une quelconque des revendications précédentes,
**caractérisé en ce que**
la plaque de montage (18) est munie de rangées de trous (37, 38) s'étendant des deux côtés parallèlement à des bords longitudinaux (32, 33) de la plaque de montage (18), avec des trous de fixation (39) pour fixer la plaque de montage (18) à l'objet à lever.

7. Dispositif de levage selon la revendication 6,
**caractérisé en ce que**
la plaque de montage (18) est munie d'au moins une autre rangée de trous (44, 45) qui est disposée le long d'une rangée de trous (37, 38) et présente une distance de trous plus réduite et/ou des trous de fixation (46) plus petits par rapport à une rangée de trous (37, 38).
